# FASCICULE DE BREVET EUROPEEN

(11) **EP 1 103 750 B1**
(45) Date de publication et mention de la délivrance du brevet: **11.02.2004**
(21) Numéro de dépôt: 00403246.2
(22) Date de dépôt: 21.11.2000
(51) Int. Cl.: F16L 3/123, F16L 3/137, F16L 3/233

(54) **Collier de serrage et de fixation pour tube ou analogue**
Schelle für Rohre oder dergleichen
Clamp for tubes or the like

(30) Priorité: 23.11.1999 FR 9914726
(43) Date de publication de la demande: 30.05.2001
(73) Titulaire: LEGRAND, F-87000 Limoges (FR)
(72) Inventeur: Le Bihan, Loic, 76140 Petit Quevilly (FR)
(74) Mandataire: Santarelli

(56) Documents cités:
- EP-A- 0 389 831
- GB-A- 1 436 233
- US-A- 3 581 349
- US-A- 4 235 404

## Description

La présente invention concerne un collier de serrage et de fixation pour un tube ou tout élément analogue tel qu'un faisceau de fils électriques.

On connaît depuis longtemps des colliers de serrage et de fixation pour tube ou analogue, du type comportant :
- un socle pourvu de moyens pour sa fixation contre une surface de support et présentant d'une part une face d'appui contre cette surface de support et d'autre part, à l'opposé de cette face d'appui, un berceau de réception du tube, et
- une lanière élastiquement extensible ayant une première extrémité reliée en permanence au socle, d'un côté du berceau, par une zone de raccordement formant charnière et une seconde extrémité pourvue de moyens d'accrochage temporaire agencés pour coopérer avec des moyens d'accrochage correspondants équipant le socle de l'autre côté du berceau.

On connaît en particulier du document FR-A-2 597 168, publié le 16 octobre 1987, un collier de serrage et de fixation dans lequel les moyens d'accrochage de la lanière sont constitués par une série de crans tandis que les moyens d'accrochage du socle sont constitués par une boucle qui forme un passage pour la sangle et dans laquelle est ménagée une dent venant en prise avec les crans de la lanière. Ce mode d'accrochage de la seconde extrémité de la lanière au socle permet un réglage du diamètre du collier et, partant, l'adaptation de ce dernier à des tubes de différents diamètres, avec un serrage convenable. Toutefois, l'opération de fermeture et de serrage du collier est assez malcommode et, surtout, le desserrage ou la réouverture du collier sont fastidieux et nécessitent l'utilisation d'un outil tel qu'un tournevis pour déformer la boucle afin de désengager la dent des crans de la lanière avec lesquels elle a tendance à venir en prise.

Pour remédier à cet inconvénient, tout en conservant une certaine capacité d'adaptation avec serrage du collier à des petites variations de diamètre d'un faisceau de fils électriques, un autre type de collier, tel que décrit dans les documents FR-A-2 551 594 et US 4 235 404, a été proposé. Dans ce type de collier, la lanière possède en elle-même une certaine capacité d'extension élastique permettant son autoadaptation à des faisceaux de fils de différents diamètres (dans une marge toutefois réduite), tandis que les moyens d'accrochage temporaire de sa seconde extrémité au socle réalisent un accrochage en un point déterminé sans possibilité de réglage fin ou de rattrapage de jeu. L'adaptation et le serrage de la lanière sur des faisceaux de différents diamètres, dans une certaine plage de valeurs, sont donc procurés par l'élasticité intrinsèque de la lanière.

Le but de l'invention est de proposer un collier de ce dernier type, à lanière élastiquement extensible et point d'accrochage sans rattrapage de jeu, dans lequel les moyens d'accrochage temporaire de la seconde extrémité de la lanière au socle soient plus commodes et plus sûrs.

En vue de la réalisation de ce but, on prévoit selon l'invention un collier de serrage et de fixation pour tube ou analogue, comportant :
- un socle pourvu de moyens pour sa fixation contre une surface de support, et
- une lanière élastiquement extensible ayant une première extrémité reliée en permanence au socle, d'un côté du berceau, par une zone de raccordement formant charnière et une seconde extrémité pourvue de moyens d'accrochage temporaire agencés pour coopérer avec des moyens d'accrochage correspondants équipant le socle de l'autre côté du berceau, les moyens d'accrochage équipant la seconde extrémité de la lanière comportant deux saillies latérales et les moyens d'accrochage du socle comportant deux crochets latéraux ouverts en direction de la face d'appui du socle et agencés pour recevoir les deux saillies latérales de la seconde extrémité de la lanière après franchissement d'un point de rebroussement d'extension maximum de la lanière, collier dans lequel les saillies latérales de la seconde extrémité de la lanière sont déportées intérieurement au moyen d'une patte rigide qui se raccorde à la seconde extrémité de la lanière en formant, au repos, avec celle-ci un angle proche de l'angle droit et qui porte à son extrémité libre les saillies latérales.

On réalise ainsi un accrochage positif de la seconde extrémité de la lanière au socle, sans possibilité de décrochage dans le sens de tension de la lanière. De plus, l'élasticité propre de la lanière tend à maintenir les saillies latérales de la seconde extrémité de la lanière dans les crochets du socle. Le décrochage de la lanière peut seulement être obtenu en exerçant, dans un geste nécessairement volontaire, un effort sur la seconde extrémité de la lanière en direction de la face d'appui du socle pour dégager les saillies latérales de leur prise avec les crochets du socle, à l'encontre de l'élasticité propre de la lanière. Cette fiabilité de l'accrochage de la lanière au socle n'est en outre pas obtenue au détriment de la commodité de l'opération d'accrochage ou de décrochage qui s'effectue manuellement d'un geste rapide et intuitif. Le fait que les saillies latérales de la seconde extrémité de la lanière soient ainsi déportées intérieurement au moyen d'une patte rigide permet de faciliter encore leur accrochage ou leur décrochage avec les crochets du socle, sans conflit avec la face d'appui sur laquelle est fixé le socle.

Selon une caractéristique avantageuse de l'invention, les crochets du socle sont constitués par des encoches ménagées en renfoncement des faces en regard de deux avancées du socle. On peut ainsi réaliser les crochets en une seule pièce avec le socle.

Selon une autre caractéristique avantageuse de l'invention, la seconde extrémité de la lanière est pourvue d'une languette de préhension ayant une extrémité reliée à la seconde extrémité de la lanière par une zone de raccordement formant charnière et une autre extrémité libre. Cette languette de préhension facilite la manipulation de la languette, et en particulier sa fermeture et son ouverture sur le socle. L'usage de cette languette de préhension est particulièrement commode, voire indispensable, dans le cas, le plus fréquent, où la surface de support contre laquelle le socle est fixé est plane (par exemple lorsqu'il s'agit de la surface d'un mur), si bien que l'opérateur ne dispose que d'un espace très limité entre les crochets du socle et la surface de support. Il ne peut donc pas manipuler efficacement avec ses seuls doigts la seconde extrémité de la lanière lors de son accrochage ou de son décrochage. Avec la languette, au contraire, il dispose d'une prise supplémentaire qui reste en retrait de la surface de support et qui lui permet d'exercer commodément et efficacement un effort de traction sur la seconde extrémité de la lanière en direction de cette surface de support sans entrer en conflit avec cette surface.

Avantageusement alors, la languette de préhension peut pivoter autour de la zone de raccordement charnière qui la relie à la seconde extrémité de la lanière entre une position active dans laquelle elle forme un certain angle avec la seconde extrémité de la lanière et une position inactive dans laquelle elle est rabattue contre la lanière, des moyens de maintien assurant une immobilisation temporaire de la languette de préhension dans sa position inactive. Ainsi, dans sa position inactive, la languette de préhension est complètement rabattue contre la lanière et ne forme donc aucune prééminence inesthétique ou gênante. De plus, et surtout, il est utile de ne pas laisser la languette de préhension en position active après la fermeture de la lanière dans la mesure où elle offre une prise particulièrement voyante permettant à une personne malveillante ou irresponsable, comme par exemple un enfant, de décrocher la lanière sans utiliser aucun outil. Au contraire, lorsque la languette de préhension est maintenue en position inactive par les moyens de maintien, en appui contre la lanière, elle se confond avec le reste de la lanière, sans attirer le regard, et ne peut être désengagée avec les moyens de maintien pour être placée en position active qu'en connaissance de sa fonction et avec l'aide d'un outil tel qu'un tournevis.

On pourra par exemple prévoir que les moyens de maintien de la languette de préhension dans sa position inactive comportent un ergot d'accrochage ménagé en relief de la face extérieure de la lanière pour coopérer avec une lumière ménagée dans la languette de préhension.

Avantageusement alors, la lumière ménagée dans la languette de préhension est oblongue dans la direction longitudinale de la lanière. La forme oblongue de la lumière ménagée dans la languette permet de prendre en compte la capacité d'allongement élastique de la lanière.

On pourra alors prévoir que l'ergot d'accrochage ménagé sur la lanière est en forme de T. Ainsi, en position inactive, la barre supérieure du T formé par l'ergot prend appui sur les bords longitudinaux de la lumière oblongue de la languette de préhension pour un maintien ferme et fiable de cette dernière quel que soit l'allongement élastique sollicité de la lanière.

Selon une autre caractéristique avantageuse de l'invention, le socle, la lanière et les moyens d'accrochage sont réalisés en une seule pièce en matière plastique et, entre ses deux extrémités, la lanière possède au moins une portion élastiquement extensible formée d'une succession de maillons en forme de boutonnière liés deux à deux, en leur milieu, par des pontets. Cette forme de réalisation de la lanière permet d'obtenir la capacité d'allongement élastique requise pour cette lanière tout en utilisant une matière plastique suffisamment rigide pour que le socle et les moyens d'accrochage (ergots et crochets) restent indéformables.

D'autres caractéristiques et avantages de l'invention apparaîtront à la lecture de la description qui suit d'un mode de réalisation particulier donné à titre d'exemple non limitatif.

Il sera fait référence aux dessins en annexe, parmi lesquels :
- la figure 1 est une vue en perspective d'un collier de serrage et de fixation conforme à l'invention ;
- la figure 2 est une vue en plan de dessus du collier de la figure 1 ;
- la figure 3 est une vue analogue à la figure 2, illustrant la capacité d'allongement élastique de la lanière du collier sous l'effet d'un effort de traction exercé sur la seconde extrémité de la lanière ;
- la figure 4 est une vue en perspective illustrant la fixation du socle du collier au moyen d'un outil cloueur dont le nez coopère avec des moyens correspondants du socle ;
- la figure 5 est une vue en perspective illustrant l'installation d'un tube sur le berceau du socle et le cerclage de ce tube par la lanière, les saillies latérales de la seconde extrémité de la lanière étant présentées à proximité des crochets du socle avant d'être engagées avec ces crochets ;
- la figure 6 est une vue en élévation de profil selon la flèche VI de la figure 5 ;
- la figure 7 est une vue en perspective analogue à la figure 5, illustrant la fermeture de la lanière avec accrochage des saillies latérales de la seconde extrémité de la lanière avec les crochets du socle ;
- la figure 8 est une vue de profil en élévation selon la flèche VIII de la figure 7 ;
- la figure 9 est une vue en perspective analogue aux figures 5 et 7, illustrant le rabattement de la languette de préhension contre la lanière, dans sa position inactive ;
- la figure 10 est une vue de profil en élévation selon la flèche X de la figure 9.

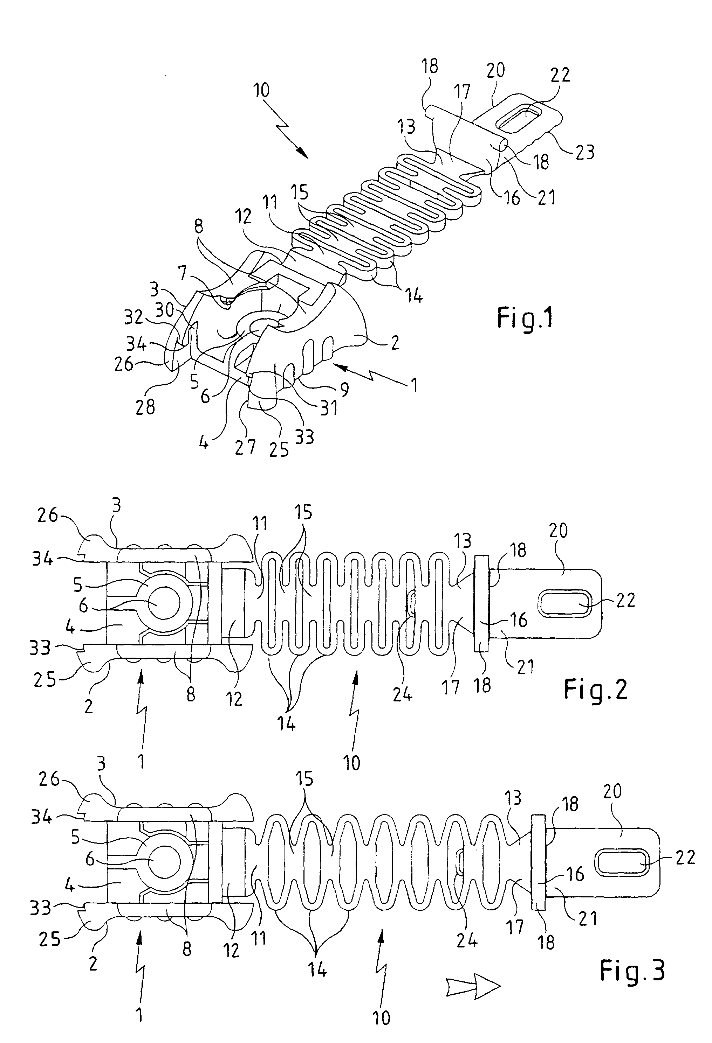

En référence aux figures, et en particulier à la figure 1, un collier de serrage et de fixation pour tube ou analogue conforme à l'invention comporte un socle 1 comportant deux oreilles 2, 3 réunies à leur base par une plaque 4. La base des deux oreilles 2, 3 et la plaque 4 présentent une face inférieure plane commune qui constitue une face d'appui 9 du socle 1 contre une surface de support S, comme cela sera mieux expliqué ultérieurement.

Le socle 1 est par ailleurs pourvu de moyens pour sa fixation sur une telle surface de support S. Ces moyens de fixation comportent un trou 6 ménagé dans la plaque 4 pour le passage d'un clou ou d'une vis de fixation. Ce trou 6 est entouré par une collerette 5 ménagée en relief de la face supérieure de la plaque 4 pour rigidifier et faciliter la fixation ainsi réalisée.

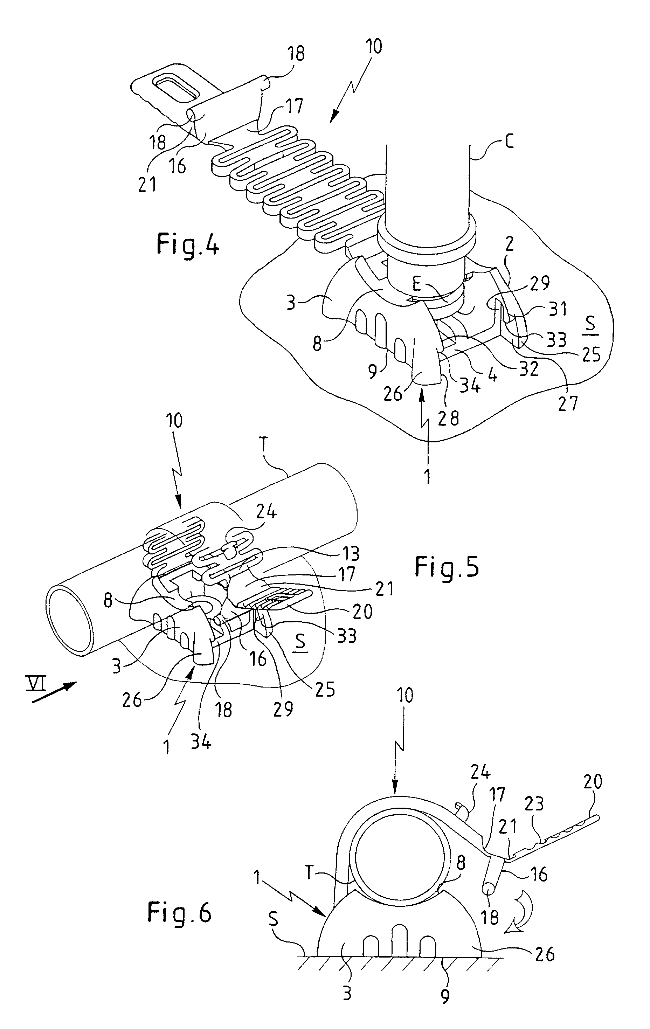

D'autre part, un rebord intérieur 7 est ménagé sur les deux oreilles 2, 3, à distance de la plaque 4 pour coopérer avec une encoche correspondante d'un nez du cloueur C, comme illustré par la figure 4.

A l'opposé de sa face d'appui 9, le socle 1 présente un berceau 8 de réception d'un tube. Ce berceau 8 est constitué par une face cylindrique ménagée au sommet des deux oreilles 2, 3 suivant un axe perpendiculaire à ces oreilles.

Le socle 1 possède par ailleurs, à sa seconde extrémité opposée à sa première extrémité à laquelle se raccorde de manière permanente la lanière 10, des moyens d'accrochage temporaire destinés à coopérer avec les moyens d'accrochage, c'est-à-dire en l'espèce les ergots 18, de la seconde extrémité 13 de la lanière 10 pour réaliser un accrochage amovible de cette seconde extrémité 13 de la lanière 10 au socle 1. Ces moyens d'accrochage temporaire du socle 1 comportent deux crochets latéraux 29, 30 ouverts en direction de la face d'appui 9 du socle 1, c'est-à-dire en direction de la surface de support S, et agencés pour recevoir les deux ergots 18 de la patte 16 équipant la seconde extrémité 13 de la lanière 10. En l'espèce, les crochets 29, 30 du socle 1 sont constitués par des encoches ménagées en renfoncement des faces opposées 27, 28, de deux pattes 25, 26 formées par des portions en avancées des oreilles 2, 3 du socle 1.

Ces encoches 29, 30 sont délimitées par une branche extérieure 31, 32 qui possède une extrémité ou point de rebroussement 33, 34 qui doit être franchi par les ergots 18 pour permettre l'engagement ou le désengagement de ces ergots avec les encoches 29, 30. En l'espèce, les points de rebroussement 33, 34 sont situés à une distance de la face d'appui 9 du socle 1, par conséquent de la surface de support S, qui est égale au diamètre des ergots 18 augmenté d'un jeu compris entre 1 et 3 mm et de préférence de 2 mm. Ainsi, dans le cas où les ergots 18 ont un diamètre de 2 mm, les points de rebroussement 33, 34 des encoches 29, 30 seront situés à une distance de la face d'appui 9 du socle 1 d'environ 4 mm.

Le collier comporte par ailleurs une lanière 10 qui possède une première extrémité 11 reliée au socle 1 par une zone de raccordement 12 de faible épaisseur formant charnière, et une seconde extrémité 13 qui est pourvue de moyens d'accrochage temporaire à une seconde extrémité du socle 1, comme cela sera mieux expliqué ultérieurement.

Entre ces deux extrémités 11 et 13, la lanière 10 est formée d'une succession de maillons 14 en forme de boutonnière liés deux à deux, en leur milieu, par des pontets 15. La lanière 10 est ainsi élastiquement extensible par déformation élastique des maillons 14 qui s'élargissent sous l'effet d'un effort de traction exercé sur la seconde extrémité 13 de la lanière (le socle 1 étant fixé), comme cela est illustré par la figure 3.

On notera que cette conformation à maillons déformables de la lanière 10 permet de réaliser cette lanière en une seule pièce en matière plastique venue de moulage avec le socle 1, comme cela est le cas dans l'exemple illustré par les figures. En effet, lors de l'extension élastique de la lanière, la matière qui la constitue se déforme seulement en flexion et aucune capacité d'allongement élastique n'est requise de cette matière. La lanière 10 peut donc être réalisée en une matière plastique classique relativement rigide qui, dans les zones de courbure de faible épaisseur des maillons 14, est élastiquement flexible et permet ainsi l'allongement élastique de la lanière 10 et qui, dans ses zones de plus forte épaisseur et/ou à structure renforcée comme le socle 1, reste rigide.

Les moyens d'accrochage équipant la seconde extrémité 13 de la lanière 10 comportent une patte rigide 16 qui se raccorde à la seconde extrémité 13 de la lanière 10 par une zone de raccordement de faible épaisseur formant charnière 17 en formant, au repos, avec cette extrémité de la lanière 10, un angle proche de l'angle droit. Cette patte 16 est pourvue à son extrémité libre de deux saillies latérales ou ergots 18 qui s'étendent à l'opposé l'un de l'autre suivant un axe commun perpendiculaire à la direction longitudinale de la lanière et par conséquent parallèle à l'axe du berceau 8 du socle 1.

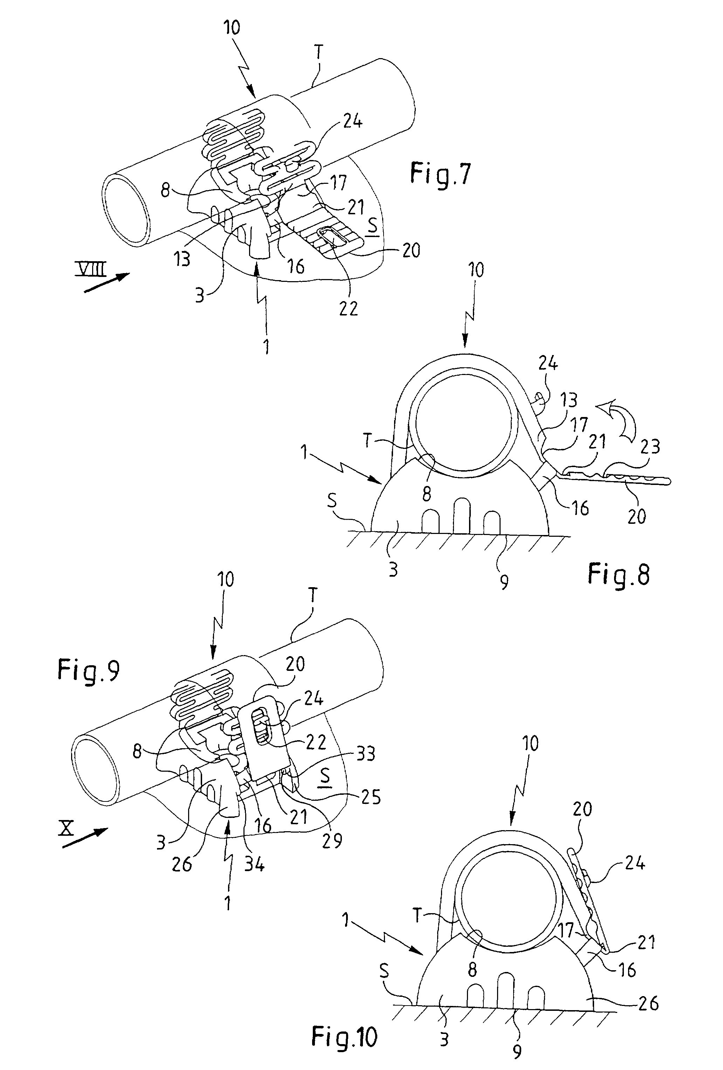

La seconde extrémité 13 de la lanière 10 est de plus pourvue d'une languette de préhension 20 qui s'étend dans le prolongement longitudinal de la lanière 10 et qui possède une extrémité reliée à la patte 16 par une zone de raccordement de faible épaisseur formant charnière 21, et une autre extrémité qui est libre. Cette languette de préhension 20 peut ainsi pivoter autour de la zone charnière 21 entre une position active dans laquelle elle forme un certain angle (comme représenté aux figures 7 et 8) avec la seconde extrémité 13 de la lanière 10 et une position inactive dans laquelle elle est rabattue contre la lanière 10 (comme représenté aux figures 9 et 10). Des moyens de maintien assurent une immobilisation temporaire de la languette de préhension 20 dans sa position inactive. Ces moyens de maintien comportent un ardillon 24 en forme de T ménagé en relief de la face extérieure de la lanière 10, sur le pontet 15 reliant les deux derniers maillons 14 de la lanière 10 avant sa seconde extrémité 13, et destiné à être engagé dans une lumière correspondante 22 ménagée dans la languette de préhension 20. La lumière 22 de la languette de préhension 20 est de forme oblongue dans la direction longitudinale de la languette 20 (qui est la même que celle de la lanière 10).

L'utilisation du collier qui vient d'être décrit se déroule de la manière suivante.

Conformément à la figure 4, le socle 1 est placé en appui contre une surface de support S (comme par exemple la surface d'un mur), avec sa face d'appui 9 plaquée contre cette surface de support S. Un outil de clouage ou cloueur C, dont seul le nez est ici représenté, est utilisé pour réaliser le clouage rapide du socle 1 sur la surface de support S. A cet effet, l'extrémité du nez du cloueur C est engagée entre les oreilles 2, 3 du socle 1 en appui contre la face supérieure de la collerette 5, une encoche E ménagée dans l'extrémité du nez du cloueur C recevant les rebords intérieurs 7 du socle 1 de manière à faciliter l'immobilisation dans la position souhaitée du nez du cloueur C. Le cloueur C est ensuite actionné pour projeter un clou (non représenté sur les figures) au travers du trou 6 de la plaque 4 du socle 1, la pointe de ce clou (ou analogue) pénétrant dans le support (dont seule la surface S est ici représentée) et la tête de ce clou prenant appui sur la face supérieure de la collerette 5 ménagée sur la plaque 4 du socle 1. Le socle 1 est ainsi convenablement fixé sur la surface de support S.

Toutefois, la fixation du socle 1 sur la surface de support S n'est pas nécessairement réalisée avec l'outil de clouage C. On peut procéder également à une fixation conventionnelle par vis ou par goujon fileté, le trou 6 étant fileté.

En référence maintenant à la figure 5, un tube T est installé sur le berceau 8 du socle 1 suivant la direction de l'axe de ce berceau, c'est-à-dire transversalement à la lanière 10. La lanière 10 est ensuite rabattue sur le tube T de manière à en réaliser le cerclage, sa seconde extrémité 13 venant à proximité des moyens d'accrochage du socle 1.

La languette de préhension 20 est détachée du ardillon 24 et placée en position active. Elle forme alors, comme représenté aux figures 5 et 6, un angle d'environ 120° avec la lanière 10. Elle est alors saisie, par exemple entre le pouce et l'index, par l'opérateur, le pouce venant au contact d'une surface striée 23 ménagée sur une face de cette languette pour éviter tout glissement. Grâce à cette prise, l'opérateur peut, sans être gêné par la surface de support S sur laquelle est fixé le socle 1, exercer sur la seconde extrémité 13 de la lanière 10 un effort de traction en direction de cette surface de support S de manière à amener les ergots 18 au-delà des points de rebroussement 33, 34 des encoches 29, 30 du socle 1. Ces points de rebroussement étant franchis, l'opérateur peut relâcher l'effort de traction qu'il exerçait sur la seconde extrémité 13 de la lanière 10 au moyens de languette de préhension 20 pour permettre, sous l'effet de l'élasticité de la lanière 10, le retrait des ergots 18 dans les encoches 29, 30 du socle 1. Les ergots 18 sont ainsi maintenus engagés dans les encoches 29, 30, en butée contre le fond de ces encoches, sous l'effet de l'effort de traction permanent exercé par l'élasticité propre de la lanière 10. Dans le cas où un effort d'arrachement est exercé sur le tube T, cet effort augmente encore la tension de la lanière 10 et il n'a donc pour effet que de plaquer encore davantage les ergots 18 dans le fond des encoches 29, 30 du socle 1. Cette configuration de fermeture de la lanière 10 est illustrée par les figures 7 et 8. Dans cette configuration, l'ouverture de la lanière 10 ne peut être obtenue que volontairement en utilisant la languette de préhension 20 pour exercer sur la seconde extrémité 13 de la lanière 10 un effort de traction tendant à rapprocher les ergots 18 de la surface de support S à l'encontre de l'élasticité propre de la lanière 10, et de manière à faire franchir à ces ergots les points de rebroussement 33, 34 et à provoquer ainsi le désengagement de ces ergots de leur prise avec les encoches 29, 30.

Comme cela est illustré par les figures 9 et 10, la languette de préhension 20 est ensuite rabattue (comme illustré par la flèche de la figure 8) contre la lanière 10 en position inactive. L'ardillon 24 est contraint par l'opérateur à traverser la lumière 22 de telle sorte que la barre supérieure du T qu'il forme prenne prise avec la languette en bordure longitudinale de la lumière oblongue 22 pour réaliser un maintien ferme et fiable de la languette 20 en position inactive. On notera que la forme oblongue de la lumière 22 de la languette 20 permet de prendre en compte l'allongement de la lanière 10 entre l'ardillon 24 et la seconde extrémité 13 de cette lanière, c'est-à-dire en l'espèce l'allongement du dernier maillon 14 de cette lanière.

On notera enfin que la capacité d'allongement élastique de la lanière 10, non seulement permet l'utilisation d'un même collier avec une lanière de longueur donnée pour des tubes ou analogues de diamètres différents compris dans une certaine plage de valeurs, mais confère de plus au collier une capacité d'auto-serrage du tube qui, en combinaison avec les moyens d'accrochage à franchissement d'un point de rebroussement d'extension maximum de la lanière, permet de réaliser un serrage ferme, rapide et fiable du tube sur le socle.

L'invention n'est pas limitée au mode de réalisation qui vient d'être décrit, mais englobe au contraire toute variante reprenant, avec des moyens équivalents, ses caractéristiques essentielles telles que définies par les revendications suivantes.

## Revendications

1. Collier de serrage et de fixation pour tube ou analogue (T), comportant :
- un socle (1) pourvu d'un berceau (8), de moyens d'accrochage (29, 30) et de moyens (5, 6) pour sa fixation contre une surface de support (S), et
- une lanière (10) élastiquement extensible ayant une première extrémité (11) reliée en permanence au socle (1), d'un côté du berceau (8), par une zone de raccordement (12) formant charnière et une seconde extrémité (13) pourvue de moyens d'accrochage temporaire (18) agencés pour coopérer avec les moyens d'accrochage correspondants (29, 30) équipant le socle (1) de l'autre côté du berceau (8), les moyens d'accrochage équipant la seconde extrémité (13) de la lanière (10) comportant deux saillies latérales (18) et les moyens d'accrochage du socle (1) comportant deux crochets latéraux (29, 30) ouverts en direction de la face d'appui (9) du socle (1) contre la surface de support (5) et agencés pour recevoir les deux saillies latérales (18) de la seconde extrémité (13) de la lanière (10) après franchissement d'un point de rebroussement (33, 34) d'extension maximum de la lanière (10),
**caractérisé en ce que** les saillies latérales (18) de la seconde extrémité (13) de la lanière (10) sont déportées intérieurement au moyen d'une patte rigide (16) qui se raccorde à la seconde extrémité (13) de la lanière (10) en formant, au repos, avec celle-ci un angle proche de l'angle droit et qui porte à son extrémité libre les saillies latérales (18).

2. Collier selon la revendication 1, **caractérisé en ce que** les crochets (29, 30) du socle (1 ) sont constitués par des encoches ménagées en renfoncement des faces (27, 28) en regard de deux avancées (25, 26) du socle.

3. Collier selon l'une des revendications précédentes, **caractérisé en ce que** la seconde extrémité (13) de la lanière (10) est pourvue d'une languette de préhension (20) ayant une extrémité reliée à la seconde extrémité (13) de la lanière (10) par une zone de raccordement (17) formant charnière et une autre extrémité libre.

4. Collier selon la revendication 3, **caractérisé en ce que** la languette de préhension (20) peut pivoter autour de la zone de raccordement charnière (17) qui la relie à la seconde extrémité (13) de la lanière (10) entre une position active dans laquelle elle forme un certain angle avec la seconde extrémité de la lanière et une position inactive dans laquelle elle est rabattue contre la lanière, des moyens de maintien (22, 24) assurant une immobilisation temporaire de la languette de préhension (20) dans sa position inactive.

5. Collier selon la revendication 4, **caractérisé en ce que** les moyens de maintien de la languette de préhension dans sa position inactive comportent un ardillon de maintien (24) ménagé en relief de la face extérieure de la lanière (10) pour coopérer avec une lumière (22) ménagée dans la languette de préhension (20).

6. Collier selon la revendication 5, **caractérisé en ce que** la lumière (22) ménagée dans la languette de préhension (20) est oblongue dans la direction longitudinale de la lanière (10).

7. Collier selon la revendication 6, **caractérisé en ce que** l'ardillon de maintien (24) ménagé sur la lanière (10) est en forme de T.

8. Collier selon l'une des revendications précédentes, **caractérisé en ce que** le socle (1), la lanière (10) et les moyens d'accrochage (18, 29, 30) sont réalisés en une seule pièce en matière plastique et **en ce que**, entre ses deux extrémités, la lanière (10) possède au moins une portion élastiquement extensible formée d'une succession de maillons (14) en forme de boutonnière liés deux à deux, en leur milieu, par des pontets (15).

## Patentansprüche

1. Klemm- und Befestigungsschelle für Rohre oder dergleichen (T), umfassend:
- einen Sockel (1), der mit einem Sattel (8), mit Einhakmitteln (29, 30) und mit Mitteln (5, 6) für seine Befestigung auf einer Tragfläche (S) versehen ist, und
- einen elastisch dehnbaren Riemen (10) mit einem ersten Ende (11), das auf einer Seite des Sattels (8) über eine ein Scharnier bildende Verbindungszone (12) bleibend mit dem Sockel (1) verbunden ist, und einem zweiten Ende (13), das mit Mitteln zum vorübergehenden Einhaken (18) versehen ist, die ausgebildet sind, um mit den entsprechenden Einhakmitteln (29, 30), mit denen der Sockel (1) auf der anderen Seite des Sattels (8) ausgerüstet ist, zusammenzuwirken, wobei die Einhakmittel, mit denen das zweite Ende (13) des Riemens (10) ausgerüstet ist, zwei seitliche Vorsprünge (18) aufweist und die Einhakmittel des Sockels (1) zwei seitliche Haken (29, 30) aufweisen, die in Richtung der Fläche (9) zur Auflage des Sockels (1) auf der Tragfläche (S) offen sind und dafür ausgebildet sind, die beiden seitlichen Vorsprünge (18) des zweiten Endes (13) des Riemens (10) nach Überschreiten eines Umkehrpunktes (33, 34) maximaler Ausdehnung des Riemens (10) aufzunehmen,
**dadurch gekennzeichnet, daß** die seitlichen Vorsprünge (18) des zweiten Endes (13) des Riemens (10) mit Hilfe eines starren Lappens (16) innen versetzt sind, der an das zweite Ende (13) des Riemens (10) anschließt, indem er im Ruhezustand mit diesem einen Winkel bildet, der dem rechten Winkel nahe ist, und der an seinem freien Ende die seitlichen Vorsprünge (18) trägt.

2. Schelle nach Anspruch 1, **dadurch gekennzeichnet, daß** die Haken (29, 30) des Sockels (1) aus Einschnitten bestehen, die zurückspringend in einander gegenüberstehenden Seiten (27, 28) von zwei Nasen (25, 26) des Sockels vorgesehen sind.

3. Schelle nach einem der vorhergehenden Ansprüche, **dadurch gekennzeichnet, daß** das zweite Ende (13) des Riemens (10) mit einer Greifzunge (20) versehen ist, die ein Ende, das mit dem zweiten Ende (13) des Riemens (10) über eine ein Scharnier bildende Verbindungszone (17) verbunden ist, und ein anderes freies Ende aufweist.

4. Schelle nach Anspruch 3, **dadurch gekennzeichnet, daß** die Greifzunge (20) um die Scharnier-Verbindungszone (17), die sie mit dem zweiten Ende (13) des Riemens (10) verbindet, zwischen einer aktiven Stellung, in der sie mit dem zweiten Ende des Riemens einen gewissen Winkel bildet, und einer inaktiven Stellung verschwenken kann, in der sie auf den Riemen heruntergeklappt ist, wobei Haltemittel (22, 24) eine vorübergehende Blockierung der Greifzunge (20) in ihrer inaktiven Stellung gewährleisten.

5. Schelle nach Anspruch 4, **dadurch gekennzeichnet, daß** die Mittel zum Halten der Greifzunge in ihrer inaktiven Stellung einen Haltedorn (24) umfassen, der auf der Außenseite des Riemens (10) vorstehend vorgesehen ist, um mit einem in der Greifzunge (20) vorgesehenen Langloch (22) zusammenzuwirken.

6. Schelle nach Anspruch 5, **dadurch gekennzeichnet, daß** das in der Greifzunge (20) vorgesehene Langloch (22) in der Längsrichtung des Riemens (10) langgestreckt ist.

7. Schelle nach Anspruch 6, **dadurch gekennzeichnet, daß** der auf dem Riemen (10) vorgesehene Haltedorn (24) T-förmig ist.

8. Schelle nach einem der vorhergehenden Ansprüche, **dadurch gekennzeichnet, daß** der Sockel (1), der Riemen (10) und die Einhakmittel (18, 29, 30) einstückig aus Kunststoff ausgeführt sind und daß der Riemen (10) zwischen seinen beiden Enden mindestens einen elastisch dehnbaren Abschnitt besitzt, der aus einer Folge von knopflochförmigen Gliedern (14) gebildet ist, die paarweise in ihrer Mitte über Stege (15) verbunden sind.

## Claims

1. Clamping and fixing clip for tube or similar (T), comprising:
- a base (1) provided with a cradle (8), coupling means (29, 30) and means (5, 6) for fixing it against a support surface (S), and
- an elastically extensible strap (10) having a first end (11) permanently connected to the base (1), on one side of the cradle (8), by a connection zone (12) forming a butt hinge and a second end (13) provided with means for temporary coupling (18) arranged to cooperate with the corresponding coupling means (29, 30) fitted to the base (1) on the other side of the cradle (8), the coupling means fitted to the second end (13) of the strap (10) comprising two lateral extensions (18) and the coupling means of the base (1) comprising two lateral hooks (29, 30) open in the direction of the support face (9) of the base (1) against the support surface (8) and arranged to receive the two lateral extensions (18) of the second end (13) of the strap (10) after crossing a point of return (33, 34) of maximum extension of the strap (10),
**characterized in that** the lateral extensions (18) of the second end (13) of the strap (10) are cut away on the inside by means of a rigid flap (16) which connects to the second end (13) of the strap (10) forming, when at rest, with the latter an angle close to a right angle and which bears at its free end the lateral extensions (18).

2. Clip according to claim 1, **characterized in that** the hooks (29, 30) of the base (1) are constituted by slots worked by recessing the faces (27, 28) opposite two projections (25, 26) of the base.

3. Clip according to one of the previous claims, **characterized in that** the second end (13) of the strap (10) is provided with a prehensile key (20) having one end connected to the second end (13) of the strap (10) by a connection zone (17) forming a butt hinge and another end free.

4. Clip according to claim 3, **characterized in that** the prehensile key (20) can pivot about the butt hinge connection zone (17) which connects it to the second end (13) of the strap (10) between an active position in which it forms a certain angle with the second end of the strap and an inactive position in which it is folded back against the strap, holding means (22, 24) ensuring a temporary immobilization of the prehensile key (20) in its inactive position.

5. Clip according to claim 4, **characterized in that** the means of holding the prehensile tongue in its inactive position comprise a holding tongue (24) arranged raised from the external face of the strap (10) in order to cooperate with a light (22) set in the prehensile key (20).

6. Clip according to claim 5, **characterized in that** the light (22) set in the prehensile key (20) is oblong in the longitudinal direction of the strap (10).

7. Clip according to claim 6, **characterized in that** the holding tongue (24) arranged on the strap (10) is T-shaped.

8. Clip according to one of the previous claims, **characterized in that** the base (1), the strap (10) and the coupling means (18, 29, 30) are made in one piece from plastic material and **in that**, between its two ends, the strap (10) has at least one elastically extensible portion formed from a succession of links (14) in slot form linked two by two, in their middle, by bridges (15).
